# EUROPEAN PATENT SPECIFICATION

(11) **EP 2 050 728 B1**
(45) Date of publication and mention of the grant of the patent: **14.12.2011**
(21) Application number: 08159897.1
(22) Date of filing: 08.07.2008
(51) Int. Cl.: C04B 37/00, C04B 38/00, C04B 28/26, B01D 39/20, B01J 35/04

(54) **Method for manufacturing honeycomb structured body**
Verfahren zur Herstellung eines Körpers mit Wabenstruktur
Procédé de fabrication d'un élément structuré en nid d'abeille

(30) Priority: 15.10.2007 WO PCT/JP2007/070097
(43) Date of publication of application: 22.04.2009
(73) Proprietor: Ibiden Co., Ltd., Ogaki-shi, Gifu 503-8604 (JP)
(72) Inventor: Kunieda, Masafumi Ibiden Co., Ltd., Ibi-gun, Gifu 501-0695 (JP); Kitajima, Mari Ibiden Co., Ltd., Ibi-gun, Gifu 501-0695 (JP)
(74) Representative: HOFFMANN EITLE

(56) References cited:
- EP-A- 0 816 065
- EP-A- 1 767 260
- EP-A- 1 813 339
- EP-A- 1 839 720
- WO-A-03/103940
- FR-A- 2 902 423
- US-A1- 2006 228 520
- US-A1- 2007 092 693

## Description

### TECHNICAL FIELD

This invention relates to a method for manufacturing a honeycomb structured body.

### BACKGROUND ART

Honeycomb catalysts have been used in order to convert exhaust gases discharged from internal combustion engines of vehicles, such as buses and trucks, construction machines and the like. As a conventional honeycomb catalyst, for example, there has been proposed a cordierite-based honeycomb structured body having an integral structure and a low thermal expansion with the surface supporting a catalyst metal such as platinum as well as a large specific surface area material such as activated alumina. In addition, a honeycomb catalyst having an alkali-earth metal such as Ba supported thereon as a NOₓ absorber has also been proposed, and this honeycomb catalyst is designed for use in converting NOₓ in an atmosphere with excessive oxygen, such as an atmosphere in a lean burn engine and a diesel engine.

There has been known a honeycomb structured body comprising a honeycomb fired body which is manufactured as follows: a honeycomb shape is formed by a high specific surface area material such as activated alumina as a main raw material, inorganic fibers serving as a reinforcing material and an inorganic binder, and then fired. Also, an aggregated honeycomb structured body formed by bonding a plurality of these honeycomb fired bodies with one another with an adhesive layer interposed therebetween has been known (for example, see Patent Document 1).

Several methods have been disclosed as a method for bonding honeycomb fired bodies to one another during manufacturing processes of an aggregated honeycomb structured body. In particular, a method for bonding a honeycomb fired bodies has been disclosed in which an adhesive paste layer containing inorganic particles, inorganic fibers and the like is formed between the side faces of the honeycomb fired bodies, and dried to form an adhesive layer for bonding the honeycomb fired bodies to one another.
Moreover, Patent Document 2 has disclosed a method, as a method for forming an adhesive paste layer between honeycomb fired bodies, in which a gap between honeycomb fired bodies (porous ceramic members) is filled with an adhesive paste as follows: manufacturing a parallel-arranged body (aggregated body of ceramic members) of the honeycomb fired bodies by assembling a plurality of honeycomb fired bodies with a gap holding member interposed therebetween; placing the parallel-arranged body formed by the assembled honeycomb fired bodies in a cylindrical jig; and applying pressure after the adhesive paste is allowed to flow into the gap.

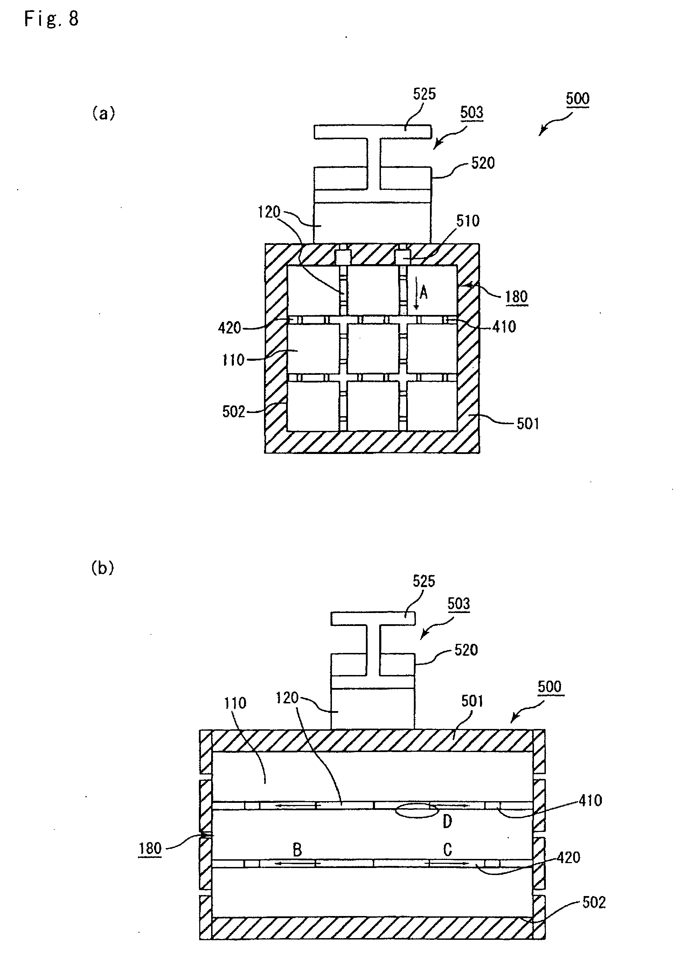

Fig. 8(a) is a cross-sectional view that schematically shows one example of a cross section of a conventional filling apparatus and a parallel-arranged body of honeycomb fired bodies placed in the filling apparatus, the view being taken perpendicular to the longitudinal direction of the parallel-arranged body, and Fig. 8 (b) is a cross-sectional view that schematically shows one example of a cross section of a conventional filling apparatus and a parallel-arranged body of honeycomb fired bodies placed in the filling apparatus of Fig. 8(a), the view being taken parallel to the longitudinal direction of the parallel-arranged body.

A filling apparatus 500 is provided with a tubiform 501 and a paste supply device 503. The tubiform 501 is provided with an inner space 502 which is allowed to accommodate a parallel-arranged body 180 of honeycomb fired bodies. The paste supply device 503 is provided with a paste chamber 520 for housing an adhesive paste 120 and an extruding mechanism 525 for extruding the adhesive paste 120 out of the paste chamber.
The tubiform 501 has an opening 510 formed thereon for allowing the paste chamber 520 and the inner space 502 to communicate with each other. The adhesive paste 120 is supplied through this opening 510.

Here, within the inner space 502, a plurality of honeycomb fired bodies 110 are placed horizontally and vertically side-by-side with a gap holding member (spacer) 410 interposed therebetween so that a gap 420 corresponding to the thickness of the spacer is formed between the honeycomb fired bodies 110.

In Figs. 8(a) and 8(b), arrows A, B and C in solid lines indicate directions of the adhesive paste to flow upon filling the gap 420 between the honeycomb fired bodies by using the filling apparatus.
That is, as the pressure is applied to the adhesive paste 120 by using the extruding mechanism 525, the gap 420 is filled with the adhesive paste 120 from the paste chamber 520 through the opening 510 so that the gap 420 is filled from the top to the bottom in Fig. 8(a), while in Fig. 8(b), the gap 420 is filled from the center to the right and left sides.

Use of such a filling apparatus allows the gap between the honeycomb fired bodies to be filled with the adhesive paste, and lastly, the adhesive paste to reach the neighborhood of both ends of the honeycomb fired bodies.
Patent Document 1: JP-A 2005-349378
Patent Document 2: WO05/047210 A1

EP-A-0 816 065 discloses a ceramic structural body comprising an assembly of plural united ceramic members each having a plurality of through-holes arranged side by side along a longitudinal direction, in which end faces at either side of these through-holes are closed in a checkered pattern so as to have a reverse relation of open and close between gas inlet side and gas outlet side and adjacent through-holes are permeable to each other through porous partition walls. A plurality of the ceramic members are integrally adhered by interposing a sealing member of an elastic material consisting of at least inorganic fibres, an inorganic binder, an organic binder and inorganic particles and mutually bonded three-dimensionally intersected organic fibres and inorganic particles through the inorganic binder and organic binder between the mutual ceramic members.

EP 1 813 339 A1 is related to a honeycomb structure having a coating layer arranged on the outer surface thereof, the coating layer containing molten inorganic oxide as a main component.

FR 2 902 423 A1 is related to a particle filter coated with a thermoplastic resin.

Finally, US2006/0228520 A1 describes a honeycomb structure having a plurality of honeycomb segments with a bonding layer interposed between these and an intermediate layer interposed between the bonding layer and the honeycomb segments containing a vitreous phase.

### DISCLOSURE OF THE INVENTION

### PROBLEMS TO BE SOLVED BY THE INVENTION

Honeycomb fired bodies for use as a catalyst supporting carrier such as disclosed in Patent Document 1 is manufactured by firing inorganic particles with a high specific surface area, inorganic fibers and the like, and consequently has a high water-absorbing property.

In addition, the adhesive paste used for filling contains inorganic particles, inorganic fibers and the like, and also contains much moisture so as to have a reduced viscosity and improved flowability.

For this reason, contact of an adhesive paste with such a honeycomb fired body may cause absorption of a portion of moisture contained in the adhesive paste into the honeycomb fired body.

In the case where the amount of the moisture contained in the adhesive paste decreases resulting from absorption into the honeycomb fired body, the viscosity of the adhesive paste increases to deteriorate the flowability of the adhesive paste.

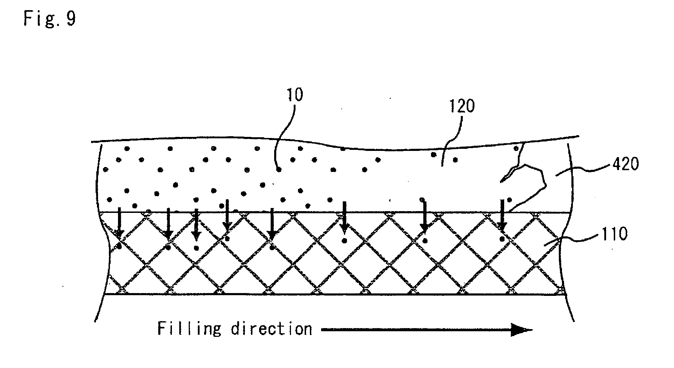

Fig. 9 is a cross-sectional view that schematically shows a neighborhood of a side face of a honeycomb fired body (region indicated by D in Fig. 8(b)) upon filling with the adhesive paste in a conventional method for manufacturing a honeycomb structured body.

In Fig. 9, the direction to be filled with the adhesive paste is from left to right.

Moreover, in Fig. 9, moisture 10 contained in the adhesive paste 120 is schematically indicated by black dots, and a portion having many black dots has a great amount of moisture, while a portion having few black dots has a small amount of moisture.

The adhesive paste 120 is a paste containing much moisture 10, as shown on the left side of Fig. 9. Here, the gap 420 between honeycomb fired bodies is gradually filled with adhesive paste 120 from the left side toward the right side in Fig. 9. Since the adhesive paste 120 is having contact with the honeycomb fired body 110, the moisture 10 contained in the adhesive paste 120 is gradually absorbed into the honeycomb fired body 110 from the adhesive paste 120, as indicated by a downward arrow in Fig. 9.

As the moisture 10 contained in the adhesive paste 120 is absorbed into the honeycomb fired body 110, the moisture 10 contained in the adhesive paste 120 gradually decreases. That is, as filling with the adhesive paste 120 proceeds to the right side of Fig. 9, the moisture 10 contained in the adhesive paste 120 decreases.

Consequently, the number of the dots indicating the moisture 10 becomes smaller on the right side of Fig. 9.

When the moisture contained in the adhesive paste decreases, the viscosity of the adhesive paste increases to deteriorate the flowability of the adhesive paste. For this reason, it sometimes becomes difficult to fill up to the neighborhood of the end face of the honeycomb fired body with the adhesive paste.
Moreover, the adhesive paste is dried up at the leading portion of the adhesive paste, possibly resulting in occurrence of cracks in the adhesive paste.

Here, in order to fill up to the neighborhood of the end face of the honeycomb fired body with the adhesive paste having a low flowability, for example, it is necessary to use the following methods: applying a pressure higher than that normally applied to the adhesive paste; separately filling with the adhesive paste also from the end face of the honeycomb fired body; and the like. However, in both of these methods, there is a problem of a reduction in the working efficiency for forming an adhesive paste layer.

The present invention has been devised to solve the above-mentioned problems, and its object is to provide a method for manufacturing a honeycomb structured body which makes it possible to form an adhesive paste layer with high working efficiency by preventing deterioration of the flowability of the adhesive paste upon filling with an adhesive paste.

The method for manufacturing a honeycomb structured body is defined in claim 1 and particularly comprises: molding a raw material composition to manufacture a pillar-shaped honeycomb molded body having a large number of cells longitudinally placed in parallel with one another with a cell wall interposed therebetween; firing the honeycomb molded body to manufacture a honeycomb fired body; preparing a water retention adhesive paste containing a water retention agent; and bonding a plurality of the honeycomb fired bodies to one another by using the water retention adhesive paste to manufacture a honeycomb aggregated body.

In the method for manufacturing a honeycomb structured body according to claim 1, the adhesive paste containing the water retention agent is prepared, and the bonding process is carried out by using the adhesive paste containing the water retention agent.
With reference to the figure, the following description will discuss effects of the method in which the adhesive paste containing the water retention agent is used.
Here, in the present invention, the water retention agent has such a property that it absorbs moisture and prevents the moisture from moving to another portion upon contact with the moisture.

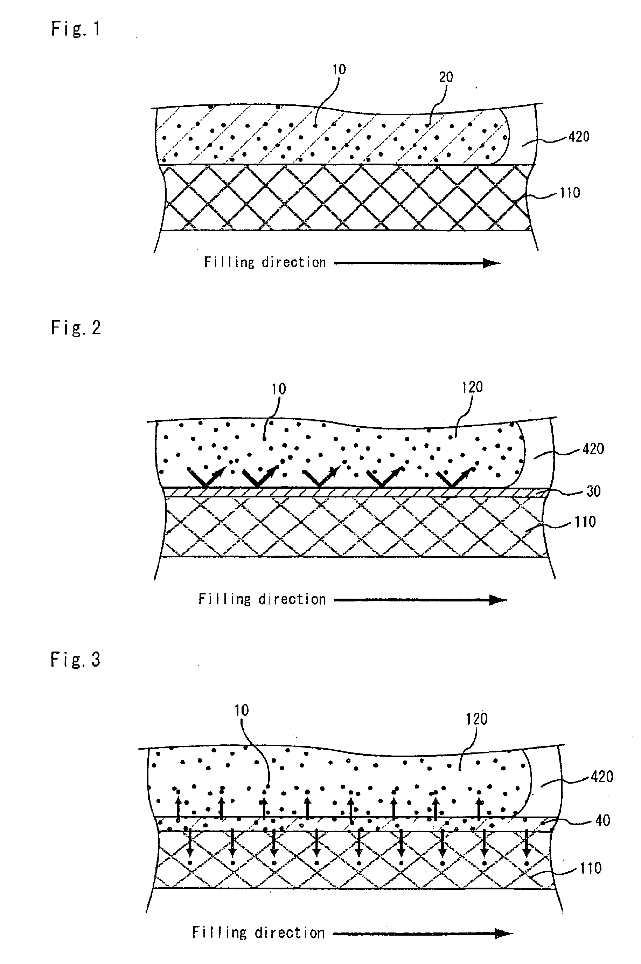

Fig. 1 is a cross-sectional view that schematically shows a neighborhood of a side face of a honeycomb fired body upon filling a water retention adhesive paste containing a water retention agent.
In Fig. 1, a water retention adhesive paste 20 corresponding to the adhesive paste containing the water retention agent is indicated by slanting lines, and the moisture 10 is contained in the water retention adhesive paste 20.
Since the moisture 10 having contact with the water retention agent is hardly allowed to move to another portion, the moisture 10 contained in the water retention adhesive paste 20 is hardly allowed to move to another portion from the water retention adhesive paste 20. Consequently, even when the water retention adhesive paste 20 and the honeycomb fired body 110 make contact with each other, the moisture 10 contained in the water retention adhesive paste 20 is hardly absorbed into the honeycomb fired body 110. Therefore, even when the gap 420 between the honeycomb fired bodies is filled with the water retention adhesive paste 20 toward the right side of Fig. 1, the amount of moisture contained in the water retention adhesive paste 20 hardly decreases.
Therefore, in Fig. 1, the dots indicating the moisture 10 are distributed virtually uniformly from the left side to the right side of the adhesive paste 20.
For this reason, it is possible to fill up to the neighborhood of the end face of the honeycomb fired body with the water retention adhesive paste while keeping the low viscosity and high flowability of the water retention adhesive paste.
Therefore, filling with the water retention adhesive paste can be carried out by applying low pressure to the water retention adhesive paste. Additionally, the adhesive paste layer can be formed with high working efficiency without necessity of separate filling with the adhesive paste from the end face of the honeycomb fired body.

In the method for manufacturing a honeycomb structured body according to the invention, the water retention agent comprises sodium polyacrylate, montmorillonite, vermiculite or saponite.
Since these components have a water retention property, the water retention adhesive paste containing any of these components makes it possible to prevent the moisture in the water retention adhesive paste from being absorbed into the honeycomb fired body.

A method for manufacturing a honeycomb structured body also disclosed herein comprises: molding a raw material composition to manufacture a pillar-shaped honeycomb molded body having a large number of cells longitudinally placed in parallel with one another with a cell wall interposed therebetween; firing the honeycomb molded body to manufacture a honeycomb fired body; forming a water repellent layer on a side face of the honeycomb fired body; and bonding a plurality of the honeycomb fired bodies to one another by using an adhesive paste to manufacture a honeycomb aggregated body, wherein the water repellent layer is a layer having a property that it repels water upon contact with water.

In this method for manufacturing a honeycomb structured body, the bonding process is carried out after the water repellent layer has been formed on the side face of the honeycomb fired body.
With reference to the figure, the following description will discuss effects of the method in which the water repellent layer is formed on a side face of a honeycomb fired body.

Fig. 2 is a cross-sectional view that schematically shows the neighborhood of a side face of a honeycomb fired body, upon filling with an adhesive paste after formation of a water repellent layer on the side face of the honeycomb fired body.
In Fig. 2, the water repellent layer 30 is indicated by slanting lines, and arrows indicate moisture being repelled by the water repellent layer 30.
The water repellent layer 30 is a layer having such a property that it repels the water upon contact with water. For this reason, when the moisture 10 contained in the adhesive paste 120 makes contact with the water repellent layer 30, the moisture 10 is repelled by the surface of the water repellent layer 30, and is consequently prevented from moving into the honeycomb fired body 110 located ahead of the water repellent layer 30 (downward in Fig. 2).
Moreover, the moisture 10 having contact with the water repellent layer 30 is not allowed to move into the inside of the water repellent layer 30.
For this reason, when the water repellent layer 30 is formed on the side faces of the honeycomb fired body 110, the moisture 10 contained in the adhesive paste 120 is unlikely to move into the honeycomb fired body 110.
In the case of filling with the adhesive paste 120 after the formation of the water repellent layer 30 on the side face of the honeycomb fired body 110, the amount of moisture contained in the adhesive paste 120 hardly decreases, even when the gap 420 between the honeycomb fired bodies is filled with the adhesive paste 120 toward the right side of Fig. 2.
Therefore, in Fig. 2, the dots indicating the moisture 10 are distributed virtually uniformly from the left side to the right side of the adhesive paste 120.
For this reason, it is possible to fill up to the neighborhood of the end face of the honeycomb fired body with the adhesive paste while keeping the low viscosity and the high flowability of the adhesive paste.
Therefore, filling with the adhesive paste can be carried out by applying low pressure to the adhesive paste. Additionally, the adhesive paste layer can be formed with high working efficiency without necessity of separate filling with the adhesive paste from the end face of the honeycomb fired body.

In a method for manufacturing a honeycomb structured body also disclosed herein, a water repellent agent is applied to a side face of the honeycomb fired body to form the water repellent layer.
The application of the water repellent agent to the side face of the honeycomb fired body facilitates the formation of the water repellent layer on the side face of the honeycomb fired body.

In a method for manufacturing a honeycomb structured body also disclosed herein, the water repellent agent comprises silicone oil, wax, or glass.
Since these components have a water repellent property, use of any of these components makes it possible to form the water repellent layer on the side face of the honeycomb fired body, and thereby to prevent the moisture contained in the adhesive paste from being absorbed into the honeycomb fired body.

A method for manufacturing a honeycomb structured body also disclosed herein comprises: molding a raw material composition to manufacture a pillar-shaped honeycomb molded body having a large number of cells longitudinally placed in parallel with one another with a cell wall interposed therebetween; firing the honeycomb molded body to manufacture a honeycomb fired body; forming a base adhesive paste layer on a side face of the honeycomb fired body; and bonding a plurality of the honeycomb fired bodies to one another by using an adhesive paste to manufacture a honeycomb aggregated body, wherein said base adhesive paste layer has a moisture content higher than that of the adhesive paste used to manufacture the honeycomb aggregated body.

In the method for manufacturing a honeycomb structured body also disclosed herein, prior to the bonding process, a base adhesive paste layer forming process is carried out to form a base adhesive paste layer having a higher moisture content on the side face of the honeycomb fired body.
Here, "the base adhesive paste layer having a higher moisture content" refers to "an adhesive paste layer having a higher moisture content (% by weight) than that of an adhesive paste to be used in the bonding process."
With reference to the figure, the following description will discuss the effects generated by forming a base adhesive paste layer on the side face of the honeycomb fired body.

Fig. 3 is a cross-sectional view that schematically shows a neighborhood of a side face of a honeycomb fired body upon filling with an adhesive paste after formation of a base adhesive paste layer on the side face of the honeycomb fired body.

In Fig. 3, the base adhesive paste layer 40 is indicated by slanting lines.

In addition, arrows indicate directions of the moisture 10 to move from the base adhesive paste layer 40 to the honeycomb fired body 110 and the adhesive paste 120.

Here, the base adhesive paste layer 40 contains more moisture 10 than the adhesive paste 120.

In this case, since the adhesive paste 120 does not directly make contact with the honeycomb fired body 110, the moisture 10 contained in the adhesive paste 120 is not directly absorbed into the honeycomb fired body 110.
Moreover, the base adhesive paste layer 40 is a layer that contains more moisture 10 than the adhesive paste 120. Consequently, when the adhesive paste 120 and the base adhesive paste layer 40 make contact with each other, less amount of moisture 10 moves from the adhesive paste 120 toward the base adhesive paste layer 40 in contrast to more amount of moisture 10 to move from the base adhesive paste layer 40 toward the adhesive paste 120.
Here, moisture also moves from the base adhesive paste layer 40 to the honeycomb fired body 110.

Therefore, in the case of filling with the adhesive paste 120 after the formation of the base adhesive paste layer 40 on the side face of the honeycomb fired body 110, the amount of moisture contained in the adhesive paste 120 hardly decreases, even when the gap 420 between the honeycomb fired bodies is filled with the adhesive paste 120 toward the right side of Fig. 3.

Therefore, in Fig. 3, the dots indicating the moisture 10 are distributed virtually uniformly from the left side toward the right side of the adhesive paste 120.

For this reason, it is possible to fill up to the neighborhood of the end face of the honeycomb fired body with the adhesive paste while keeping the low viscosity and the high flowability of the adhesive paste.

Therefore, filling with the adhesive paste can be carried out by applying low pressure to the adhesive paste. Additionally, the adhesive paste layer can be formed with high working efficiency without necessity of separate filling with the adhesive paste from the end face of the honeycomb fired body.

In a method for manufacturing a honeycomb structured body also disclosed herein, moisture is added to the adhesive paste used in the bonding to prepare a base adhesive paste serving as a material for the base adhesive paste layer.
Since the adhesive paste to be used in the bonding process and the base adhesive paste are different from each other only in their moisture contents, the adhesive layers having the same composition can be formed by drying these two kinds of adhesive pastes. When the adhesive layers to be formed have the same composition, no border is substantively formed. Therefore, when such a honeycomb structured body is used as a catalyst supporting carrier, the resulting adhesive layer eliminates peeling and the like between the adhesive layers.

In a method for manufacturing a honeycomb structured body also disclosed herein, the base adhesive paste is applied to each side face of the honeycomb fired body to form the base adhesive paste layer.
The application of the base adhesive paste to the side face of honeycomb fired body facilitates the formation of the base adhesive paste layer on the side face of the honeycomb fired body.

In a method for manufacturing a honeycomb structured body also disclosed herein, the raw material composition comprises inorganic particles, inorganic fibers and/or whiskers and an inorganic binder.
In a method for manufacturing a honeycomb structured body also disclosed herein, the inorganic particles are at least one kind selected from the group consisting of alumina, silica, zirconia, titania, ceria, mullite and zeolite.
In a method for manufacturing a honeycomb structured body also disclosed herein, the inorganic fibers and/or whiskers are at least one kind selected from the group consisting of alumina, silica, silicon carbide, silica-alumina, glass, potassium titanate and aluminum borate.
In a method for manufacturing a honeycomb structured body also disclosed herein, the inorganic binder includes at least one kind selected from the group consisting of alumina sol, silica sol, titania sol, water glass, sepiolite and attapulgite.
Use of the raw material composition containing these substances according to the above makes it possible to manufacture a honeycomb structured body having a high specific surface area and high strength.
Moreover, the honeycomb structured body having a high specific surface area and high strength can be desirably used as a catalyst supporting carrier.

### BEST MODE FOR CARRYING OUT THE INVENTION

### (First Embodiment)

The following description will discuss one embodiment of the method for manufacturing a honeycomb structured body of the present invention.

First, with reference to the figures, the following description will describe the honeycomb structured body manufactured by the method for manufacturing the honeycomb structured body.

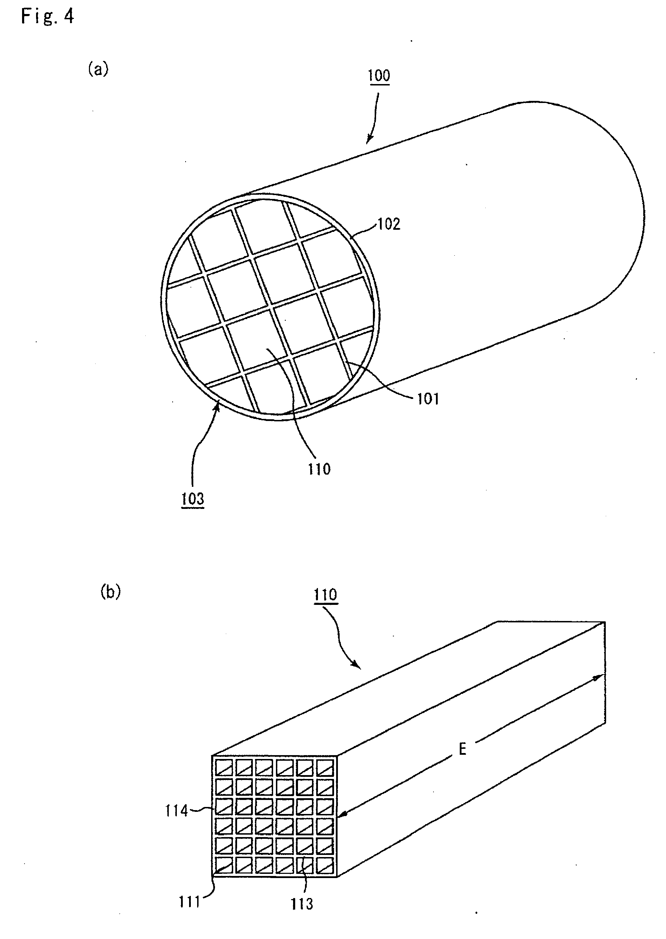

Fig. 4 (a) is a perspective view schematically showing one example of a honeycomb structured body of the present invention, and Fig. 4(b) is a perspective view schematically showing one example of a honeycomb fired body.
In a honeycomb structured body 100 shown in Fig. 4(a), a plurality of square pillar-shaped honeycomb fired bodies 110 which comprises a porous ceramic shown in Fig. 4(b), are combined with one another by interposing an adhesive layer 101 to form a ceramic block 103, with a coat layer 102 formed on the periphery of the ceramic block 103.

In the honeycomb fired body 110 shown in Fig. 4(b), a large number of cells 111 are aligned side by side in the longitudinal direction (in a direction indicated by an arrow E in Fig. 4(b)) with a cell wall 113 interposed therebetween.
Here, an outer wall 114 is formed on the outermost periphery of the honeycomb fired body 110.

A fluid such as exhaust gases is allowed to flow through the cells 111, and a catalyst used for converting the exhaust gases can be supported on the cell wall 113 and the outer wall 114. Therefore, when the exhaust gases are allowed to flow through the cells 111 with the catalyst supported on the cell wall 113 and the outer wall 114, toxic components contained in the exhaust gases flowing through the cells 111 are converted by functions of the catalyst supported thereon.

The following description will discuss a method for manufacturing such a honeycomb structured body by using a water retention adhesive paste containing a water retention agent.

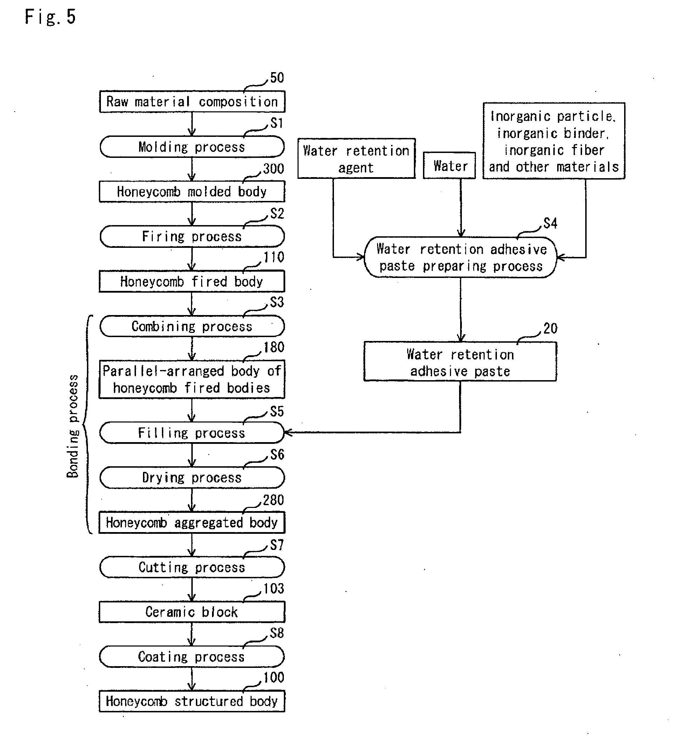

Fig. 5 is a flow chart that illustrates main processes of the method for manufacturing a honeycomb structured body in which a honeycomb structured body is manufactured by using the water retention adhesive paste containing the water retention agent.

First, a molding process S1 is carried out to manufacture a honeycomb molded body 300 by molding a raw material composition 50.
In the molding process S1, the raw material composition 50 containing inorganic particles such as alumina is extruded from a die by using an extrusion molding machine to manufacture a honeycomb molded body having virtually the same shape as that of a honeycomb fired body to be manufactured.
The raw material composition 50 is a mixture which contains inorganic particles, inorganic fibers and/or whiskers and an inorganic binder, and to which an organic binder, a dispersant and a forming auxiliary are further added on demand depending on the moldability.
Moreover, if necessary, processes such as a cutting process, a drying process and a degreasing process are carried out on the manufactured honeycomb molded body 300.
In the drying process of the honeycomb molded body, a microwave drying apparatus, a hot-air drying apparatus, a dielectric drying apparatus, a reduced-pressure drying apparatus, a vacuum drying apparatus, a freeze drier or the like may be used.
Moreover, although not particularly limited, degreasing conditions in the degreasing process are selected on demand depending on kinds and amounts of organic components contained in the molded body, and preferably set to about 400°C for about two hours.

Successively, a firing process S2 is carried out. In the firing process S2, the honeycomb molded body 300 is fired in a firing furnace to manufacture a honeycomb fired body 110. Although not particularly limited, the firing conditions are preferably from 500 to 1200°C, more preferably from 600 to 1000°C.
By carrying out these processes, a pillar-shaped honeycomb fired body having a large number of cells longitudinally placed in parallel with one another with a cell wall therebetween can be manufactured.
Here, in the present specification, "the pillar shape" includes a desired pillar shape, such as a cylindrical shape, a cylindroid shape and a polygonal pillar shape.

Next, a combining process S3 is carried out. The combining process S3 is a process to manufacture a parallel-arranged body 180 of honeycomb fired bodies having a predetermined shape by combining a plurality of honeycomb fired bodies 110 with one another with a spacer interposed therebetween.
In this combining process, by using the spacer having the same thickness as the thickness of the adhesive layer to be formed, a gap having the same width as the thickness of the spacer is formed between the side faces of the respective honeycomb fired bodies 110.
Although not particularly limited, examples of the material for the spacer preferably include cardboard, fibrous paper, inorganic material sheet and the like.

Prior to the next filling process S5, a water retention adhesive paste preparing process S4 is carried out to prepare a water retention adhesive paste 20 to be used in the filling process S5.
In the water retention adhesive paste preparing process S4, the water retention adhesive paste 20 is prepared by mixing and kneading a water retention agent, water, 1 inorganic particles, inorganic fibers and/or whiskers, an inorganic binder and other materials.

Although not particularly limited as long as the water retention agent can prevent moisture in the adhesive paste from being absorbed into the honeycomb fired body, examples thereof include a water absorbing polymer, a high porosity adhesive, montmorillonite, vermiculite, saponite and the like.
Examples of the water absorbing polymer include sodium polyacrylate and the like.

Next, the filling process S5 is carried out by using the prepared water retention adhesive paste 20.
In the filling process S5, the parallel-arranged body 180 of honeycomb fired bodies manufactured in the combining process S3 is placed in a filling apparatus as shown in Figs. 8 (a) and 8(b), and the water retention adhesive paste 20 is charged into the paste chamber of the filling apparatus.
Then, by using the extruding mechanism of the filling apparatus, the water retention adhesive paste 20 is filled into the gap formed in the parallel-arranged body 180 of honeycomb fired bodies.
At this time, since the moisture contained in the water retention adhesive paste is hardly absorbed into the honeycomb fired bodies, the gap is filled with the water retention adhesive paste up to the neighborhood of the end face of the honeycomb fired body while keeping the low viscosity and high flowability of the water retention adhesive paste.

Next, a drying process S6 is carried out on the parallel-arranged body of honeycomb fired bodies filled with the water retention adhesive paste. In the drying process S6, the water retention adhesive paste is dried and solidified to be formed into an adhesive layer; thus, the honeycomb fired bodies are bonded to one another with the adhesive layer interposed therebetween.
Although not particularly limited, the drying conditions are preferably set to heating at 50 to 150°C for one hour.
Here, a series of processes for bonding the honeycomb fired bodies to one another, which is including the combining process, the filling process and the drying process, are collectively defined as a bonding process.
By carrying out the bonding process, a honeycomb aggregated body 280 having a plurality of honeycomb fired bodies bonded to one another with an adhesive layer interposed therebetween can be manufactured.

Hereinafter, a cutting process S7 is carried out to manufacture a ceramic block 103 by cutting the periphery of the manufactured honeycomb aggregated body into a predetermined shape such as a cylindrical shape.
Moreover, a coating process S8 is carried out to form a coat layer on the periphery of the ceramic block 103 by applying a sealing material paste to the outer peripheral face of the ceramic block 103, then drying and solidifying the sealing material paste.
Here, it is not necessarily required to carry out the cutting process S7 and the coating process S8, and these processes may be carried out on demand.

The following description will summarize the effects of the method for manufacturing a honeycomb structured body of the present embodiment.
(1) In the method for manufacturing a honeycomb structured body of the present embodiment, an adhesive paste containing a water retention agent is prepared, and a bonding process is carried out by using the adhesive paste containing the water retention agent.

Much moisture is contained in the water retention adhesive paste. Since the moisture having contact with the water retention agent is hardly allowed to move to another portion, the moisture contained in the water retention adhesive paste is hardly allowed to move to another portion from the water retention adhesive paste. Consequently, even when the water retention adhesive paste and the honeycomb fired body make contact with each other, the moisture contained in the water retention adhesive paste is hardly absorbed into the honeycomb fired body. Therefore, even in the process in which the gap between the honeycomb fired bodies is filled with the water retention adhesive paste, the amount of moisture contained in the water retention adhesive paste hardly decreases. For this reason, it is possible to fill up to the neighborhood of the end face of the honeycomb fired body with the water retention adhesive paste while keeping the low viscosity and high flowability of the water retention adhesive paste.

Therefore, filling with the water retention adhesive paste can be carried out by applying low pressure to the water retention adhesive paste. Additionally, the adhesive paste layer can be formed with high working efficiency without necessity of separate filling with the adhesive paste from the end face of the honeycomb fired body.
(2) In the method for manufacturing a honeycomb structured body of the present embodiment, the water retention agent includes sodium polyacrylate, montmorillonite, vermiculite or saponite.

The water retention adhesive paste containing any of these components makes it possible to prevent the moisture in the water retention adhesive paste from being absorbed into the honeycomb fired body, due to the water retention property of these components.
(3) In the honeycomb structured body of the present embodiment, the raw material composition contains inorganic particles, inorganic fibers and/or whiskers and an inorganic binder. Use of the raw material composition containing these components makes it possible to manufacture a honeycomb structured body having a high specific surface area and high strength.

The honeycomb structured body having a high specific surface area and high strength can be desirably used as a catalyst supporting carrier.

The following description will discuss Examples that more specifically disclose the first embodiment of the present invention. Here, the present invention is not intended to be limited only by these Examples.
In the present Examples and Comparative Examples, 1 a honeycomb fired body was manufactured, and an adhesive paste layer was applied to the side face of the honeycomb fired body so that the amount of moisture (water absorbing ratio) absorbed into the honeycomb fired body was measured. Moreover, in the bonding process, filling with the adhesive paste was carried out with a predetermined load being applied to the adhesive paste, so that the degree of filling with the adhesive paste was observed.

### EXAMPLES

(Example 1)
(Process for manufacturing honeycomb fired body)
An amount of 2250 g of γ-alumina particles (average particle diameter: 2 µm), 680 g of aluminum borate whiskers (average fiber diameter: 0.5 to 1 µm, average fiber length: 10 to 30 µm) and 2600 g of silica sol (solid concentration: 30% by weight) were mixed. To the obtained mixture were added 320 g of methyl cellulose as the organic binder, 290 g of a lubricant (UNILUB, manufactured by NOF Corporation) and 225 g of a plasticizer (glycerin), and the resulting mixture was further mixed and kneaded to obtain a raw material composition. Next, this raw material composition was extrusion-molded by using an extrusion molding machine to obtain a raw honeycomb molded body.

Next, the raw honeycomb molded body was sufficiently dried by using a microwave drying apparatus and a hot air drying apparatus, and then maintained at a temperature of 400°C for two hours to be degreased to obtain a honeycomb degreased body.
Thereafter, the honeycomb degreased body was maintained at a temperature of 800°C for two hours to be fired so that a rectangular pillar-shaped honeycomb fired body (37 mm x 37 mm x 150 mm) having a cell density of 93 pcs/cm² (600 cpsi), a thickness of the cell wall of 0.2 mm and a tetragonal shape (square) in the cross-sectional shape of each cell was obtained.

### (Process for preparing water retention adhesive paste)

An amount of 29% by weight of γ-alumina particles (average particle diameter: 2 µm), 7% by weight of aluminum borate whiskers (average fiber diameter: 0.5 to 1 µm, average fiber length: 10 to 30 µm), 34% by weight of silica sol (solid concentration: 30% by weight), 5% by weight of carboxy methylcellulose (CMC) and 25% by weight of water were mixed to prepare an adhesive paste. Additionally, with respect to 100 parts by weight of the adhesive paste, 0.2 parts by weight of sodium polyacrylate was added as a water retention agent to prepare a water retention adhesive paste.

### (Measurement of weight increasing ratio of honeycomb fired body due to water absorption)

After measurement of the weight of the manufactured honeycomb fired body, the prepared water retention adhesive paste was applied to one side face (upper face) of the honeycomb fired body so as to have a thickness of 1 mm, and left to stand for 30 seconds.
Thereafter, the applied water retention adhesive paste was scraped from the side face of the honeycomb fired body by using a scraper, and the weight of the honeycomb fired body was measured again.
Thus, a weight change of the honeycomb fired body before and after the application of the adhesive paste was measured. On the supposition that the increased weight of the honeycomb fired body corresponds to moisture absorbed from the adhesive paste, the weight increasing ratio (%) of the honeycomb fired body due to the water absorption was calculated by the following equation.
The weight increasing ratio (%) of the honeycomb fired body due to water absorption = [(the weight of the honeycomb fired body after the application of the adhesive paste - the weight of the honeycomb fired body before the application of the adhesive paste)/the weight of the honeycomb fired body before the application of the adhesive paste] x 100
Table 1 shows the results of the calculations.

### (Observation of filling property)

Sixteen honeycomb fired bodies (not including the honeycomb fired body used for the measurement of the weight increasing ratio) were stacked four by four vertically as well as horizontally with a spacer interposed therebetween so as to manufacture a parallel-arranged body of honeycomb fired bodies.
Next, the parallel-arranged body of honeycomb fired bodies was placed inside a filling apparatus, and a water retention adhesive paste was charged into the paste chamber of the filling apparatus.
Pressure of 1.3 kgf/cm² (0.13 MPa) was applied onto the water retention adhesive paste by using an extruding mechanism, in attempting to fill the gap formed in the parallel-arranged body of honeycomb fired bodies with the water retention adhesive paste.
Then, the gap was smoothly filled with the water retention adhesive paste, and the water retention adhesive paste had reached the end face of each honeycomb fired body.
That is, in the present Example, it was possible to fill with the water retention paste with high working efficiency, and the filling property of the adhesive paste was good.

### (Examples 2 to 4)

The measurements of the weight increasing ratio and the observation of the filling property were carried out by following the same processes as in Example 1 except that in the process for preparing the water retention adhesive paste, each of substances (0.2 parts by weight) shown in Table 1 was added as a water retention agent relative to 100 parts by weight of the adhesive paste to prepare a water retention adhesive paste.
Table 1 shows the results.

### (Comparative Example 1)

The measurements of the weight increasing ratio and the observation of the filling property were carried out by following the same processes as in Example 1 except that no water retention agent was added to the adhesive paste. Table 1 shows the results.

**[Table 1]**

| | Water retention agent | Weight increasing ratio (%) of honeycomb fired body due to water absorption | Filling property |
|---|---|---|---|
| Example 1 | Sodium polyacrylate | 1.0 | Good |
| Example 2 | Montmorillonite | 0.8 | Good |
| Example 3 | Vermiculite | 1.1 | Good |
| Example 4 | Saponite | 1.0 | Good |
| Comparative Example 1 | None | 3.5 | Bad |

Comparing the results of respective Examples and Comparative Example shown in Table 1, the weight increasing ratios of the honeycomb fired bodies of respective Examples due to water absorption are relatively lower than that in Comparative Example 1, thus indicating that moisture in the adhesive paste is hardly absorbed into the honeycomb fired body.
Moreover, the filling properties were good in the respective Examples; in contrast, in Comparative Example 1, the flowability of the adhesive paste deteriorated in the middle of the filling process, failing to fill with the adhesive paste up to the end face of the honeycomb fired body. That is, Comparative Example 1 was bad in the filling property.

The above-mentioned results show that use of the water retention adhesive paste containing the water retention agent makes it possible to prevent moisture in the adhesive paste from being absorbed into the honeycomb fired body, and consequently to fill with the adhesive paste with high working efficiency.

### (Second Embodiment)

The following description will discuss a second embodiment relating to one embodiment of the method for manufacturing a honeycomb structured body of the present invention.

In the present embodiment, a bonding process is carried out with formation of a water repellent layer on a side face of a honeycomb fired body.
Here, an adhesive paste having no water retention agent is used as the adhesive paste.
Since a honeycomb structured body to be manufactured in the present embodiment has the same structure as that of the honeycomb structured body manufactured in the method for manufacturing a honeycomb structured body in the first embodiment, the detailed description of the honeycomb structure body is omitted.

The following description will discuss a method for manufacturing a honeycomb structured body, in which a water repellent layer is formed on a side face of a honeycomb fired body to manufacture the honeycomb structured body.

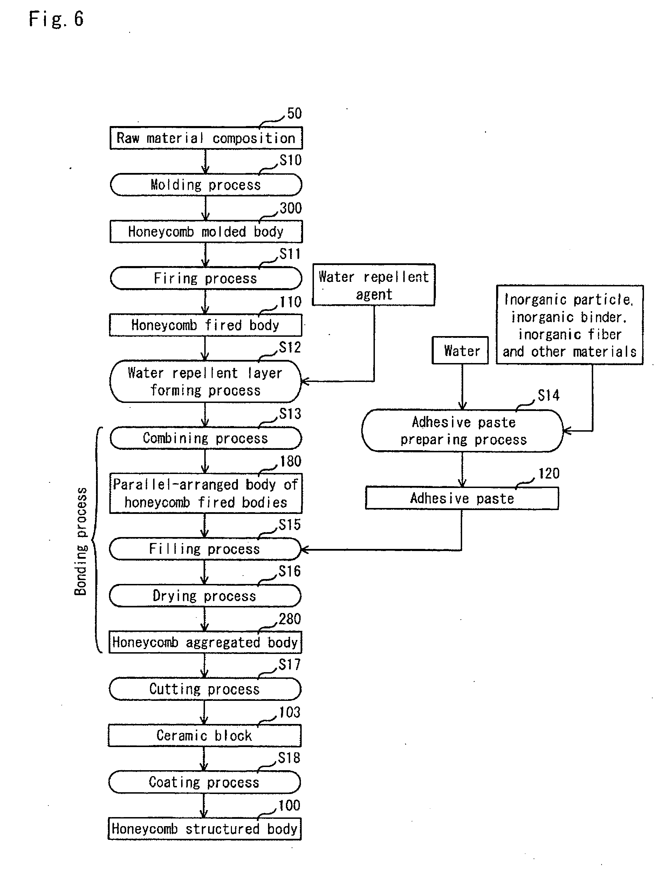

Fig. 6 is a flow chart that illustrates main processes of the method for manufacturing a honeycomb structured body, in which the water repellent layer is formed on the side face of the honeycomb fired body.

First, by following the same processes as in the method for manufacturing a honeycomb structured body of the first embodiment, a molding process S10 and a firing process S11 are carried out to manufacture the honeycomb fired body 110.
Next, a water repellent layer forming process S12 is carried out to form the water repellent layer on the side face of the honeycomb fired body 110.

In the water repellent layer forming process S12, a water repellent agent is applied to the side face of the honeycomb fired body 110 to form the repellent layer on the side faces of the honeycomb fired body. Although the water repellent agent is not particularly limited as long as it exerts a water repellent property upon contact with water, examples thereof include silicone oil, wax, glass and the like.
When silicone oil in the form of a liquid is used, the silicone oil, as it is, may be applied to the side face of the honeycomb fired body to form the water repellent layer on the side face of the honeycomb fired body.
When wax is used, wax may be rubbed onto the side face of the honeycomb fired body, or may be heated into a liquid, and then applied thereon to form the water repellent layer.
When glass is used, a glass coating agent containing a SiO₂ component is applied and dried to form the water repellent layer.

Next, a combining process S13 is carried out by following the method for manufacturing the honeycomb structured body of the first embodiment using the honeycomb fired body with water repellent layer formed on the side face thereof to manufacture a parallel-arranged body 180 of the honeycomb fired bodies.
Successively, prior to a filling process S15, an adhesive paste preparing process S14 is carried out.
The same adhesive paste as that used in the method for manufacturing a honeycomb structured body of the first embodiment except that it contains no water retention agent may be used as the adhesive paste 120 to be prepared in the adhesive paste preparing process S14.

Thereafter, the filling process S15 and the drying process S16 are carried out by following the same processes as in the method for manufacturing a honeycomb structured body of the first embodiment to manufacture a honeycomb aggregated body 280. Moreover, a cutting process S17 is carried out on demand to form a ceramic block 103, and a coating process S18 is carried out thereon to manufacture a honeycomb structured body 100.

The following description will summarize the effects of the method for manufacturing a honeycomb structured body of the present embodiment.
In addition to the effect (3) described in the first embodiment, the present embodiment makes it possible to exert the following effects.
(4) In the method for manufacturing a honeycomb structured body of the present embodiment, after formation of the water repellent layer on the side face of each honeycomb fired body, the bonding process is carried out on the honeycomb fired bodies.

The water repellent layer is a layer having such a property that it repels the water upon contact with water. For this reason, when moisture contained in the adhesive paste makes contact with the water repellent layer, the moisture is repelled by the surface of the water repellent layer, and is consequently prevented from moving into the honeycomb fired body located ahead of the water repellent layer.
Moreover, the moisture having contact with the water repellent layer is not allowed to move into the inside of the water repellent layer.
For this reason, when the water repellent layer is formed on the side face of the honeycomb fired body, the moisture contained in the adhesive paste is unlikely to move into the honeycomb fired body.
Here, in the case of filling with the adhesive paste after the formation of the water repellent layer on the side face of the honeycomb fired body, the amount of moisture contained in the adhesive paste hardly decreases, during the filling process of the gap the honeycomb fired bodies with the adhesive paste. For this reason, it is possible to fill up to the neighborhood of the end face of the honeycomb fired body with the adhesive paste while keeping the low viscosity and high flowability of the adhesive paste.

Therefore, filling with the adhesive paste can be carried out by applying low pressure to the adhesive paste. Additionally, the adhesive paste layer can be formed with high working efficiency without necessity of separate filling with the adhesive paste from the end face of the honeycomb fired body.
(5) In the method for manufacturing a honeycomb structured body of the present embodiment, the water repellent agent includes any of silicone oil, wax or glass.
   Since these substances have a water repellent property, use of any of these components makes it possible to form the water repellent layer on the side face of the honeycomb fired body, and thereby to prevent the moisture contained in the adhesive paste from being absorbed into the honeycomb fired body.

The following description will discuss Examples that more specifically disclose the second embodiment.
In the present Examples, measurements of the water absorbing ratio and observation of the filling property of the adhesive paste were carried out by following the same processes as in the Examples of the method for manufacturing a honeycomb structural body of the first embodiment.

### (Example 5)

Honeycomb fired bodies were manufactured by following the same processes as in Example 1.

A water repellent layer forming process was carried out to form a water repellent layer on the side face of the honeycomb fired body by applying silicone oil serving as a water repellent agent to the side face of the honeycomb fired body.

Here, an adhesive paste prior to the addition of a water retention agent prepared in Example 1 (the same adhesive paste used in Comparative Example 1) was prepared as the adhesive paste.
The measurements of the weight increasing ratio and the observation of the filling property were carried out by following the same processes as in Example 1 using the honeycomb fired body with the water repellent layer formed thereon and the adhesive paste.
Table 2 shows the results.

### (Example 6)

The measurements on the weight increasing ratio and the observation of the filling property were carried out by following the same processes as in Example 5 except that wax was used as the water repellent agent. Table 2 shows the results.
Here, the water repellent layer was formed by heating wax into a liquid and then applying the wax to the side face of the honeycomb fired body.

### (Example 7)

The measurements of the weight increasing ratio and the observation of the filling property were carried out by following the same processes as in Example 5 except that glass was used as the water repellent agent. Table 2 shows the results.
Here, the water repellent layer was formed by applying a glass coating agent containing SiO₂ to the side face of the honeycomb fired body and drying the glass coating agent.

**[Table 2]**

| | Water repellent agent | Weight increasing ratio (%) of honeycomb fired body due to water absorption | Filling property |
|---|---|---|---|
| Example 5 | Silicone oil | 0.1 | Good |
| Example 6 | Wax | 0.1 | Good |
| Example 7 | Glass | 0.1 | Good |
| Comparative Example 1 | None | 3.5 | Bad |

Comparing the results of the respective Examples and Comparative Example shown in Table 2, the weight increasing ratios of the honeycomb fired bodies of the respective Examples due to water absorption are relatively lower than that in Comparative Example 1, with the result that moisture in the adhesive paste is hardly absorbed into the honeycomb fired body.
Moreover, the filling properties are good in the respective Examples; in contrast, in Comparative Example 1, the flowability of the adhesive paste decreased in the middle of the filling process, failing to fill up to the end face of the honeycomb fired body with the adhesive paste. That is, Comparative Example 1 is insufficient in the filling property.

The above-mentioned results clearly show that formation of the water repellent layer on the side face of the honeycomb fired body makes it possible to prevent moisture in the adhesive paste from being absorbed into the honeycomb fired body, and consequently to fill with the adhesive paste with high working efficiency.

### (Third Embodiment)

The following description will discuss the third embodiment which is one embodiment of the method for manufacturing a honeycomb structured body of the present invention.

In the present embodiment, the bonding process is carried out by forming a base adhesive paste layer on a side face of a honeycomb fired body.
Here, an adhesive paste, which contains no water retention agent and has a moisture content higher than that of the adhesive paste used for filling a gap between the honeycomb fired bodies, is used as the base adhesive paste.
Further, since a honeycomb structured body to be manufactured in the present embodiment has the same structure as that of the honeycomb structured body manufactured in the method for manufacturing the honeycomb structured body in the first embodiment, the detailed description of the honeycomb structured body is omitted.

The following description will discuss a method for manufacturing a honeycomb structured body in which a base adhesive paste layer is formed on a side face of a honeycomb fired body.

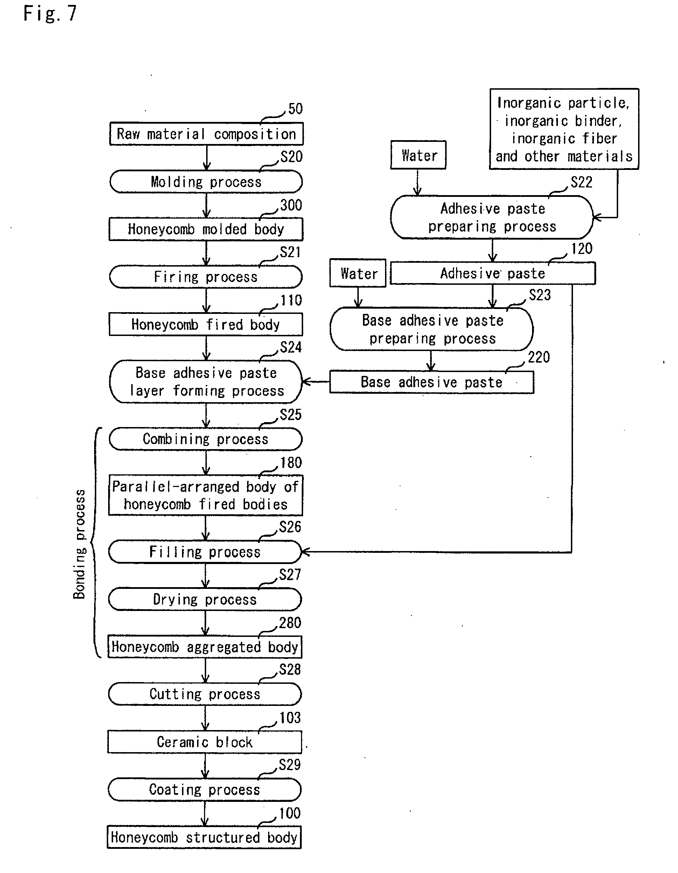

Fig. 7 is a flow chart that illustrates main processes of the method for manufacturing a honeycomb structured body in which a base adhesive paste layer is formed on a side face of a honeycomb fired body.

First, by following the same processes as in the method for manufacturing a honeycomb structured body of the first embodiment, a molding process S20 and a firing process S21 are carried out to manufacture a honeycomb fired body 110.
Next, prior to a base adhesive paste layer forming process S24 in which a water repellent layer is formed on the side face of the honeycomb fired body 110, an adhesive paste preparing process S22 and a base adhesive paste preparing process S23 are carried out.

In the adhesive paste preparing process S22, an adhesive paste 120 is prepared by following the same processes as in the method for manufacturing a honeycomb structured body of the second embodiment.
Then, in the base adhesive paste preparing process S23, water is further added to the adhesive paste 120 and kneaded to prepare a base adhesive paste 220 having a moisture content higher than that of the adhesive paste 120.

In the base adhesive paste layer forming process S24, the base adhesive paste layer is formed on the side face of the honeycomb fired body by applying the base adhesive paste 220 to the side face of the honeycomb fired body 110.
Here, the base adhesive paste layer is formed on each side face of the honeycomb fired bodies except the side faces serving as a peripheral face in a parallel-arranged body of honeycomb fired bodies to be manufactured.

Next, by using the honeycomb fired body with the base adhesive paste layer formed on the side face thereof, a combining process S25 is carried out by following the same processes as in the method for manufacturing a honeycomb structured body of the first embodiment to manufacture a parallel-arranged body 180 of the honeycomb fired bodies.
Successively, a filling process S26 is carried out by following the same manner as in the method for manufacturing a honeycomb structured body of the first embodiment to fill the gap between the honeycomb fired bodies with the adhesive paste by using the adhesive paste 120 prepared in the adhesive paste preparing process S22.

Hereinafter, a drying process S27 is carried out by following the same processes as in the method for manufacturing a honeycomb structured body of the first embodiment to manufacture a honeycomb aggregated body 280. Moreover, a cutting process S28 is carried out thereon, if necessary, to form a ceramic block 103, and a coating process S29 is carried out thereon to manufacture a honeycomb structured body 100.

The following description will summarize the effects of the method for manufacturing a honeycomb structured body of the present embodiment.
In addition to the effect (3) described in the first embodiment, the present embodiment makes it possible to exert the following effects.
(6) In the method for manufacturing a honeycomb structured body of the present embodiment, after formation of the base adhesive paste layer on the side face of each honeycomb fired body, the bonding process is carried out on the honeycomb fired bodies.
When the base adhesive paste layer is formed, since the adhesive paste does not directly make contact with the honeycomb fired bodies, moisture contained in the adhesive paste is prevented from being directly absorbed into the honeycomb fired bodies.
Moreover, the base adhesive paste layer is a layer that contains more moisture than the adhesive paste. For this reason, when the adhesive paste and the base adhesive paste layer make contact with each other, less amount of moisture moves from the adhesive paste toward the base adhesive paste layer in contrast to more amount of moisture to move from the base adhesive paste layer toward the adhesive paste.
Therefore, in the case of filling with the adhesive paste after the formation of the base adhesive layer on the side face of the honeycomb fired body, the amount of moisture contained in the adhesive paste hardly decreases in the process for filling the gap between the honeycomb fired bodies with the adhesive paste. For this reason, it is possible to fill up to the neighborhood of the end face of the honeycomb fired body with the adhesive paste while keeping the low viscosity and the high flowability of the adhesive paste.

Therefore, filling with the adhesive paste can be carried out by applying low pressure to the adhesive paste. Additionally, the adhesive paste layer can be formed with high working efficiency without necessity of separate filling with the adhesive paste from the end face of the honeycomb fired body.
(7) In the method for manufacturing a honeycomb structured body of the present embodiment, the moisture is added to an adhesive paste to be used in the bonding process to prepare a base adhesive paste serving as a material for the base adhesive paste.

Since the adhesive paste to be used in the bonding process and the base adhesive paste are different from each other only in their moisture contents, the adhesive layers having the same composition can be formed by drying these two kinds of adhesive pastes. When the adhesive layers to be formed have the same composition, no border is substantively formed. Therefore, when such a honeycomb structured body is used as a catalyst supporting carrier, the resulting adhesive layer eliminates peeling and the like between the adhesive layers.

The following description will discuss Examples that specifically disclose the third embodiment.
In the present Examples, the filling property of the adhesive paste was observed by following the same processes as in the Examples of the method for manufacturing a honeycomb structured body of the first embodiment.

### (Example 8)

Honeycomb fired bodies were manufactured by following the same processes as in Example 1.

Here, an adhesive paste prior to the addition of a water retention agent, prepared in Example 1 (the same adhesive paste used in Comparative Example 1), was prepared as the adhesive paste.
Moreover, 100 parts by weight of water was added to 100 parts by weight of the adhesive paste to prepare a base adhesive paste.

Subsequently, the base adhesive paste was applied to the side faces of the honeycomb fired body to form base adhesive paste layer.
Here, the thickness of the formed base adhesive paste layer was 200 µm.

The observation of the filling property was carried out by following the same processes as in Example 1 using the honeycomb fired body with the base adhesive paste layer formed thereon and the adhesive paste.
The results show that the filling property was good.

The above-mentioned result indicates that the formation of the base adhesive paste layer on the side face of the honeycomb fired body makes it possible to fill with the adhesive paste with high working efficiency.

### (Other Embodiments)

In the embodiments described above, the filling property of the adhesive paste has been improved respectively by using the water retention adhesive paste, forming the water repellent layer or forming the base adhesive paste layer, respectively. Some of these methods may be used in combination.
For example, the water repellent layer may be preliminarily formed on the side face of the honeycomb fired body, and the water retention adhesive paste is used as the adhesive paste.

Although not particularly limited, the amount of the water retention agent to be added relative to 100 parts by weight of the adhesive paste is preferably 0.05 to 2 parts by weight.
In the case where the amount of addition is less than 0.05 parts by weight, the slightly larger amount of moisture moves from the water retention adhesive paste to the honeycomb fired body; in contrast, the amount of addition exceeding 2 parts by weight fails to further improve the flowability of the water retention adhesive paste.

Although not particularly limited, the thickness of the water repellent layer to be formed on the side face of the honeycomb fired body is preferably 200 µm or less.
The thickness of the water repellent layer exceeding 200 µm tends to cause degradation of adhesive strength between the adhesive layer and the honeycomb fired body.

The thickness of the base adhesive paste layer is preferably 100 to 300 µm.
In the case where the thickness of the base adhesive paste layer is less than 100 µm, a small amount of the moisture contained in the adhesive paste may penetrate through the base adhesive paste layer, and be absorbed into the honeycomb fired body; in contrast, the thickness of the base adhesive paste layer exceeding 300 µm makes the width of the gap narrower, making it difficult to fill it with the adhesive paste.

Moreover, the method for forming the water repellent layer or the base adhesive paste layer is not limited to the applying method, and a general coating method may be used. For example, a coating method such as methods using a coater or a spray may be used.

The shape of the honeycomb structured body to be formed by the method for manufacturing a honeycomb structured body of the present invention is not particularly limited to a cylindrical shape, and may be a desired pillar shape such as a cylindroid shape and a polygonal pillar shape.

Moreover, the thickness of the adhesive layer to be formed in the method for manufacturing a honeycomb structured body of the present invention is preferably 0.5 to 5 mm.
The thickness of the adhesive layer of less than 0.5 mm may fail to provide a sufficient strength. Moreover, since the adhesive layer corresponds to a portion that does not function as a catalyst supporting carrier, the thickness of the adhesive layer of more than 5 mm tends to cause a reduction in a specific surface area of the honeycomb structured body per unit volume. Consequently, it may result in insufficient high dispersion of the catalyst, in use of the honeycomb structured body as a catalyst supporting carrier for converting exhaust gases.
In addition, the thickness of the adhesive layer of more than 5 mm may cause a high pressure loss.

Examples of the inorganic particles contained in the raw material composition are particles including alumina, silica, zirconia, titanic, ceria, mullite, zeolite or the like. Each of these particles may be used alone, or two or more kinds of these may be used in combination.
Out of these, in particular, alumina particles or ceria particles are preferably used.

Examples of the inorganic fibers and/or whiskers contained in the raw material composition are alumina, silica, silicon carbide, silica-alumina, glass, potassium titanate and the like. Each of these may be used alone, or two or more kinds of these may be used in combination. Out of the above-mentioned inorganic fibers and/or whiskers, aluminum borate whiskers are more preferably used.
Here, in the present description, the inorganic fibers and whiskers are referred to as those having an average aspect ratio (length/diameter) of more than 5. Moreover, the preferable average aspect ratio of the inorganic fibers and whiskers is 10 to 1000.

With respect to the inorganic binder contained in the raw material composition, inorganic sol, clay-based binder and the like may be used, and specific examples of the inorganic sol include alumina sol, silica sol, titania sol, water glass and the like. Moreover, specific examples of the clay-based binder include clays of the polychain-type structure, such as white clay, kaolin, montmorillonite, sepiolite and attapulgite, and the like. Each of these may be used alone, or two or more kinds of these may be used in combination.
Out of these, at least one kind selected from a group consisting of alumina sol, silica sol, titania sol, water glass, sepiolite and attapulgite is preferably used.
The inorganic sol, the clay-based binder and the like contain moisture, and the moisture contained therein is removed by heating and the like to obtain remaining inorganic components as an inorganic binder.

With respect to the amount of the inorganic particles contained in the raw material composition, the lower limit is preferably 30% by weight, more preferably 40 by weight, further more preferably 50% by weight.
In contrast, the upper limit thereof is preferably 97% by weight, more preferably 90% by weight, further more preferably 80% by weight, still further more preferably 75% by weight.
The content of the inorganic particles of less than 30% by weight makes the amount of inorganic particles that contribute to improvements of the specific surface area relatively smaller, with the result that the specific surface area of the honeycomb structured body (honeycomb fired body) becomes smaller, sometimes failing to high dispersion of a catalyst component upon supporting the catalyst component; in contrast, the content thereof exceeding 97% by weight makes the amount of the inorganic fibers and/or whiskers that contribute to improvements in strength relatively smaller, resulting in a reduction in the strength of the honeycomb fired body.

With respect to the total amount of the inorganic fibers and/or whiskers contained in the raw material composition, the lower limit is preferably 3% by weight, more preferably 5% by weight, further more preferably 8% by weight. In contrast, the upper limit is preferably 70% by weight, more preferably 50% by weight, further more preferably 40% by weight, still further more preferably 30% by weight.
The content of the inorganic fibers and/or whiskers of less than 3% by weight tends to deteriorate the strength of the honeycomb fired body; in contrast, the content thereof exceeding 50% by weight makes the amount of inorganic particles that contribute to improvements of the specific surface area relatively smaller, with the result that the specific surface area of the honeycomb structured body (honeycomb fired body) becomes smaller, failing to high dispersion of a catalyst component upon supporting the catalyst component.

With respect to the amount of the inorganic binder contained in the raw material composition, the lower limit thereof as solids content is preferably 5% by weight relative to the total amount of the solid components including the inorganic particles, the inorganic fibers and/or whiskers and the inorganic binder contained in the raw material composition, more preferably 10% by weight, further more preferably 15% by weight. In contrast, the upper limit thereof is preferably 50% by weight, more preferably 40% by weight, further more preferably 35% by weight.
The amount of the inorganic binder of less than 5% by weight as solids content tends to deteriorate the strength of the manufactured honeycomb fired body; in contrast, the amount of the inorganic binder exceeding 50% by weight as solids content tends to deteriorate the moldability of the raw material composition.

Although not particularly limited, examples of the plasticizer contained in the raw material composition include glycerin and the like. Moreover, although not particularly limited, examples of the lubricant include polyoxy alkylene-based compounds, such as polyoxy ethylene alkylether, polyoxy propylene alkylether and the like.
Specific examples of the lubricant are polyoxy ethylene monobutyl ether or polyoxy propylene monobutyl ether.
Here, the plasticizer and lubricant may not be included in the raw material composition on demand.

Moreover, although not particularly limited, examples of the dispersant contained in the raw material composition are water, an organic solvent (benzene and the like), alcohol (methanol and the like) and the like.
Although not particularly limited, examples of the forming auxiliary are ethylene glycol, dextrin, fatty acid, fatty acid soap, polyalcohol and the like.

With respect to the inorganic particles, inorganic fibers and/or whiskers and inorganic binder to be contained in the adhesive paste, those inorganic particles, inorganic fibers and/or whiskers and inorganic binder used as the raw material compositions may be desirably used.
Moreover, an inorganic binder may be contained in the adhesive paste. The organic binder is not particularly limited, and examples thereof are polyvinyl alcohol, methylcellulose, ethylcellulose, carboxy methylcellulose and the like.

Moreover, a catalyst supporting process for supporting a catalyst on a manufactured honeycomb structured body may be carried out.

Although not particularly limited, examples of the catalyst (catalyst metal) to be supported on the honeycomb structured body of the present embodiment are noble metal, alkali metal, alkali earth metal and the like.
Each of these may be used alone, or two or more kinds of these may be used in combination.

Here, the timing at which the catalyst is supported is not particularly limited, and the catalyst may be supported after a honeycomb structured body has been manufactured, or may be supported on inorganic particles in a state of a raw material used for a honeycomb fired body. Although not particularly limited, examples of the method of supporting a catalyst may be an immersing method and the like.

### BRIEF DESCRIPTION OF THE DRAWINGS

Fig. 1 is a cross-sectional view that schematically shows a neighborhood of a side face of a honeycomb fired body upon filling a water retention adhesive paste containing a water retention agent.
Fig. 2 is a cross-sectional view that schematically shows a neighborhood of a side face of a honeycomb fired body upon filling with an adhesive paste after formation of a water repellent layer on the side face of the honeycomb fired body.
Fig. 3 is a cross-sectional view that schematically shows a neighborhood of a side face of a honeycomb fired body upon filling with an adhesive paste after formation of a base adhesive paste layer on the side face of the honeycomb fired body.
Fig. 4 (a) is a perspective view schematically showing one example of a honeycomb structured body of the present invention, and Fig. 4(b) is a perspective view schematically showing one example of a honeycomb fired body.
Fig. 5 is a flow chart that illustrates main processes of a method for manufacturing a honeycomb structured body in which a honeycomb structured body is manufactured by using a water retention adhesive paste containing a water retention agent.
Fig. 6 is a flow chart that illustrates main processes of a method for manufacturing a honeycomb structured body in which a water repellent layer is formed on a side face of a honeycomb fired body.
Fig. 7 is a flow chart that illustrates main processes of a method for manufacturing a honeycomb structured body in which a base adhesive paste layer is formed on a side face of a honeycomb fired body.
Fig. 8(a) is a cross-sectional view that schematically shows one example of a cross section of a conventional filling apparatus and a parallel-arranged body of honeycomb fired bodies placed in the filling apparatus, the view being taken perpendicular to the longitudinal direction of the parallel-arranged body, and Fig. 8 (b) is a cross-sectional view that schematically shows one example of a cross section of the filling apparatus of an adhesive paste and the parallel-arranged body of honeycomb fired bodies placed in the filling apparatus of Fig. 8(a), the view being taken parallel to the longitudinal direction thereof.
Fig. 9 is a cross-sectional view that schematically shows a neighborhood of a side face (area indicated by D in Fig. 8(b)) of a honeycomb fired body upon filling an adhesive paste therein, in a conventional method for manufacturing a honeycomb structured body.

### EXPLANATION OF SYMBOLS

- 10: Moisture
- 20: Water retention adhesive paste
- 30: Water repellent layer
- 40: Base adhesive paste layer
- 50: Raw material composition
- 100: Honeycomb structured body
- 101: Adhesive layer
- 110: Honeycomb fired body
- 111: Cell
- 113: Cell wall
- 120: Adhesive paste
- 220: Base adhesive paste
- 280: Honeycomb aggregated body
- 300: Honeycomb molded body

## Claims

1. A method for manufacturing a honeycomb structured body comprising:
molding a raw material composition to manufacture a pillar-shaped honeycomb molded body having a large number of cells longitudinally placed in parallel with one another with a cell wall interposed therebetween;
firing said honeycomb molded body to manufacture a honeycomb fired body;
preparing a water retention adhesive paste containing a water retention agent; and
bonding a plurality of said honeycomb fired bodies to one another by using said water retention adhesive paste to manufacture a honeycomb aggregated body,
wherein
said water retention agent comprises sodium polyacrylate, montmorillonite, vermiculite or saponite.

2. The method for manufacturing a honeycomb structured body according to claim 1,
wherein
said raw material composition comprises inorganic particles, inorganic fibers and/or whiskers and an inorganic binder.

3. The method for manufacturing a honeycomb structured body according to claim 2,
wherein
said inorganic particles are at least one kind selected from the group consisting of alumina, silica, zirconia, titania, ceria, mullite and zeolite.

4. The method for manufacturing a honeycomb structured body according to claim 2 or 3,
wherein
said inorganic fibers and/or whiskers are at least one kind selected from the group consisting of alumina, silica, silicon carbide, silica-alumina, glass, potassium titanate and aluminum borate.

5. The method for manufacturing a honeycomb structured body according to any of claims 2 to 4,
wherein
said inorganic binder includes at least one kind selected from the group consisting of alumina sol, silica sol, titania sol, water glass, sepiolite and attapulgite.

## Patentansprüche

1. Verfahren zum Herstellen eines Körpers mit Wabenstruktur umfassend:
Formen einer Rohmaterialmischung zum Herstellen eines säulenförmig ausgeformten Wabenkörpers mit einer großen Anzahl an Zellen, die längs parallel zueinander mit einer Zellwand dazwischen angeordnet sind,
Brennen des ausgeformten Wabenkörpers, um einen gebrannten Wabenkörper herzustellen,
Vorbereiten einer Wasserretentionsklebepaste mit einem Wasserretentionsmittel, und
dem Verbinden mehrerer gebrannter Wabenkörper miteinander unter Benutzung der Wasserrückhalteklebepaste, um einen zusammengesetzten Wabenkörper herzustellen,
wobei
das Wasserretentionsmittel Natriumpolyacrylat, Montmorrilonit, Vermiculit oder Saponit aufweist.

2. Verfahren zum Herstellen eines Körpers mit Wabenstruktur nach Anspruch 1,
wobei
die Rohmaterialmischung anorganische Partikel, anorganische Fasern und/oder Fäden und ein anorganisches Bindemittel aufweist.

3. Verfahren zum Herstellen eines Körpers mit Wabenstruktur nach Anspruch 2,
wobei
die anorganischen Partikel von wenigstens einer Sorte sind, die aus der Gruppe ausgewählt wurde, die aus Aluminiumoxid, Siliziumoxid, Zirkonoxid, Ceroxid, Mullit und Zeolit besteht.

4. Verfahren zum Herstellen eines Körpers mit Wabenstruktur nach Anspruch 2 oder 3,
wobei
die anorganischen Fasern und/oder Fäden von wenigstens einer Sorte sind, die aus der Gruppe ausgewählt ist, die aus Aluminiumoxid, Siliziumoxid, Siliziumcarbid, Siliziumoxid-Aluminiumoxid, Glas, Kaliumtitanat und Aluminiumborat besteht.

5. Verfahren zum Herstellen eines Körpers mit Wabenstruktur nach einem der Ansprüche 2 bis 4,
wobei
das anorganische Bindemittel wenigstens eine Sorte enthält, die aus der Gruppe ausgewählt ist, die aus Aluminiumoxidsuspension, Siliziumoxidsuspension, Titanoxidsuspension, Wasserglas, Sepiolit und Attapulgit besteht.

## Revendications

1. Procédé pour fabriquer un corps structuré en nid d'abeilles comprenant les étapes consistant à :
mouler une composition de matière première pour fabriquer un corps moulé en nid d'abeilles en forme de pilier ayant un grand nombre de cellules placées longitudinalement parallèlement entre elles, une paroi cellulaire étant interposée entre celles-ci;
cuire ledit corps moulé en nid d'abeilles pour fabriquer un corps cuit en nid d'abeilles ;
préparer une pâte adhésive à rétention d'eau contenant un agent de rétention d'eau ; et
lier une pluralité desdits corps cuits en nid d'abeilles les uns aux autres en utilisant ladite pâte adhésive à rétention d'eau pour fabriquer un corps agrégé en nid d'abeilles,
dans lequel
ledit agent de rétention d'eau comprend du polyacrylate de sodium, de la montmorillonite, de la vermiculite ou de la saponite.

2. Procédé pour fabriquer un corps structuré en nid d'abeilles selon la revendication 1,
dans lequel
ladite composition de matière première comprend des particules inorganiques, des fibres inorganiques et/ou des trichites et un liant inorganique.

3. Procédé pour fabriquer un corps structuré en nid d'abeilles selon la revendication 2,
dans lequel
lesdites particules inorganiques sont au moins une sorte sélectionnée à partir du groupe constitué par l'alumine, la silice, la zircone, l'oxyde de titane, l'oxyde de cérium, la mullite et la zéolite.

4. Procédé pour fabriquer un corps structuré en nid d'abeilles selon la revendication 2 ou 3,
dans lequel
lesdites fibres inorganiques et/ou trichites sont au moins une sorte sélectionnée à partir du groupe constitué par l'alumine, la silice, le carbure de silicium, la silice-alumine, le verre, le titanate de potassium et le borate d'aluminium.

5. Procédé pour fabriquer un corps structuré en nid d'abeilles selon l'une quelconque des revendications 2 à 4,
dans lequel
ledit liant inorganique inclut au moins une sorte sélectionnée à partir du groupe constitué par un sol d'alumine, un sol de silice, un sol d'oxyde de titane, du verre soluble, la sépiolite et l'attapulgite.
